(19) Europäisches Patentamt
European Patent Office
Office européen des brevets

(11) **EP 4 708 786 A1**

(12) **EUROPEAN PATENT APPLICATION**

(43) Date of publication:
**11.03.2026 Bulletin 2026/11**

(21) Application number: **25200492.4**

(22) Date of filing: **05.09.2025**

(51) International Patent Classification (IPC):
**H04L 25/02** $^{(2006.01)}$

(52) Cooperative Patent Classification (CPC):
**H04L 25/024; H04L 25/022;** H04L 25/0224;
H04L 25/0256

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **06.09.2024 US 202463691908 P
29.08.2025 US 202519315431**

(71) Applicant: **Samsung Electronics Co., Ltd.
Suwon-si, Gyeonggi-do 16677 (KR)**

(72) Inventors:
• **ATTIA, Mohamed
San Jose, CA, 95134 (US)**
• **PENNA, Federico
San Jose, CA, 95134 (US)**
• **KWON, Hyuk Joon
San Jose, CA, 95134 (US)**
• **BAI, Dongwoon
San Jose, CA, 95134 (US)**

(74) Representative: **Kuhnen & Wacker
Patent- und Rechtsanwaltsbüro PartG mbB
Prinz-Ludwig-Straße 40A
85354 Freising (DE)**

(54) **SYSTEM AND METHOD FOR CHANNEL ESTIMATION**

(57) A system and a method are disclosed for channel estimation. In some embodiments, a method includes: calculating (600), by a receiver, a first channel estimate, at an nth point in time, the calculating including calculating an (n+D)th state vector, the (n+D)th state vector corresponding to a channel history at an (n+D)th point in time, D being a positive integer; performing (605) signal processing of a received signal, based on the first channel estimate, to generate processed data; and transmitting (610) the processed data to a data consumer, the (n+D)th state vector including elements from p update intervals, the first channel estimate at the nth point in time including an element for each of k subcarriers, k being a positive integer, and the (n+D)th state vector having fewer than kp(D+1) elements.

| Calculate, by a receiver, a first channel estimate, at an nth point in time, the calculating comprising calculating an (n+D)th state vector, the (n+D)th state vector corresponding to a channel history at an (n+D)th point in time, D being a positive integer | 600 |
| --- | --- |

↓

| Perform signal processing of a received signal, based on the first channel estimate, to generate processed data | 605 |
| --- | --- |

↓

| Transmit the processed data to a data consumer | 610 |
| --- | --- |

FIG. 6A

EP 4 708 786 A1

**Description**

TECHNICAL FIELD

The disclosure generally relates to wireless communications. More particularly, the subject matter disclosed herein relates to improvements to systems and methods for channel estimation.

SUMMARY

In a wireless communications system, a non-ideal channel response may alter the received waveform so that it is not an attenuated copy of the transmitted waveform. This may degrade the performance of the system.
To solve this problem a wireless receiver may perform channel estimation, e.g., based on a reference signal transmitted by a wireless transmitter. Non-causal channel estimation, such as that provided by a Kalman smoother employing state augmentation, may be used. The estimated channel response obtained from such channel estimation may then be used to compensate, in the receiver, for differences between the channel and an ideal channel.
One issue with the above approach is that a Kalman smoother employing state augmentation may place a high computational burden on the hardware in which it is implemented, and the operation of a Kalman smoother employing state augmentation may consume significant amounts of power.
To overcome these issues, systems and methods are described herein for performing non-causal Kalman smoothing using an extended state vector, instead of state augmentation.
The above approaches improve on previous methods because a Kalman smoother using an extended state vector places less of a computational burden on the hardware in which it is implemented and consumes less power, than a Kalman smoother employing state augmentation.
According to an embodiment of the present disclosure, there is provided a method, including: calculating, by a receiver, a first channel estimate, at an nth point in time, the calculating including calculating an (n+D)th state vector, the (n+D)th state vector corresponding to a channel history at an (n+D)th point in time, D being a positive integer; performing signal processing of a received signal, based on the first channel estimate, to generate processed data; and transmitting the processed data to a data consumer, the (n+D)th state vector including elements from p update intervals, the first channel estimate at the nth point in time including an element for each of k subcarriers, k being a positive integer, and the (n+D)th state vector having fewer than kp(D+1) elements.
In some embodiments, the (n+D)th state vector has fewer than kp(D+1)/2 elements.
In some embodiments, the (n+D)th state vector has fewer than 2k(D+1) elements or fewer than 2kp elements.
In some embodiments, the first channel estimate at the nth point in time is a vector including an element for each of a plurality of subcarriers.
In some embodiments, the method further includes calculating an mth state vector, the mth state vector corresponding to a channel history at an mth point in time; and the calculating of the mth state vector including calculating a product of a state transition model raised to the power j and an updated (m-j)th state vector, the updated (m-j)th state vector corresponding to a channel history at an (m-j)th point in time.
In some embodiments, the receiver lacks measurements for a plurality of update intervals between the (m-j)th point in time and the mth point in time.
In some embodiments, the first channel estimate is a scalar corresponding to a first subcarrier of a plurality of subcarriers, and the method further comprises calculating a second channel estimate, at the nth point in time, the second channel estimate at the nth point in time being a scalar corresponding to a second subcarrier of the plurality of subcarriers.
In some embodiments, the method further includes calculating an mth state vector, the mth state vector corresponding to a channel history at an mth point in time; and the calculating of the mth state vector including calculating a product of a state transition model raised to the power j and an updated (m-j)th state vector, the updated (m-j)th state vector corresponding to a channel history at an (m-j)th point in time.
In some embodiments, the receiver lacks measurements for a plurality of update intervals between the (m-j)th point in time and the mth point in time.
According to an embodiment of the present disclosure, there is provided a system, including: a radio; and one or more processors; and a memory storing instructions which, when executed by the one or more processors, cause performance of: calculating, by a receiver, a first channel estimate, at an nth point in time, the calculating including calculating an (n+D)th state vector, the (n+D)th state vector corresponding to a channel history at an (n+D)th point in time, D being a positive integer; performing signal processing of a received signal, based on the first channel estimate, to generate processed data; and transmitting the processed data to a data consumer, the (n+D)th state vector including elements from p update intervals, the first channel estimate at the nth point in time including an element for each of k subcarriers, k being a positive integer, and the (n+D)th state vector having fewer than kp(D+1) elements.
In some embodiments, the (n+D)th state vector has fewer than kp(D+1)/2 elements.

In some embodiments, the (n+D)th state vector has fewer than 2k(D+1) elements or fewer than 2kp elements.

In some embodiments, : the instructions, when executed by the one or more processors, further cause performance of calculating an mth state vector, the mth state vector corresponds to a channel history at an mth point in time; and the calculating of the mth state vector includes calculating a product of a state transition model raised to the power j and an updated (m-j)th state vector, the updated (m-j)th state vector corresponding to a channel history at an (m-j)th point in time.

In some embodiments, the system lacks measurements for a plurality of update intervals between the (m-j)th point in time and the mth point in time.

In some embodiments, the first channel estimate at the nth point in time is a vector including an element for each of a plurality of subcarriers.

In some embodiments: the first channel estimate is a scalar corresponding to a first subcarrier of a plurality of subcarriers, and the instructions, when executed by the one or more processors, further cause performance of: calculating a second channel estimate, at the nth point in time, the second channel estimate at the nth point in time being a scalar corresponding to a second subcarrier of the plurality of subcarriers.

In some embodiments: the instructions, when executed by the one or more processors, further cause performance of calculating an mth state vector, the mth state vector corresponds to a channel history at an mth point in time; and the calculating of the mth state vector includes calculating a product of a state transition model raised to the power j and an updated (m-j)th state vector, the updated (m-j)th state vector corresponding to a channel history at an (m-j)th point in time.

In some embodiments, the system lacks measurements for a plurality of update intervals between the (m-j)th point in time and the mth point in time.

BRIEF DESCRIPTION OF THE DRAWINGS

In the following section, the aspects of the subject matter disclosed herein will be described with reference to exemplary embodiments illustrated in the figures, in which:

FIG. 1A is a system-level block diagram of a non-terrestrial network, according to an embodiment.
FIG. 1B is a block diagram of a ground receiver, according to an embodiment.
FIG. 2 is a time-frequency diagram, according to an embodiment.
FIG. 3 is a time diagram of measurements and estimates, according to an embodiment.
FIG. 4 is a time diagram of measurements and estimates, according to an embodiment.
FIG. 5 is a diagram of update intervals with measurements and update intervals without measurements, according to an embodiment.
FIG. 6A is a portion of a flow chart, according to an embodiment.
FIG. 6B is a portion of a flow chart, according to an embodiment.
FIG. 7 is a block diagram of an electronic device in a network environment, according to an embodiment.
FIG. 8 shows a system including a UE and a gNB in communication with each other.

DETAILED DESCRIPTION

In the following detailed description, numerous specific details are set forth in order to provide a thorough understanding of the disclosure. It will be understood, however, by those skilled in the art that the disclosed aspects may be practiced without these specific details. In other instances, well-known methods, procedures, components and circuits have not been described in detail to not obscure the subject matter disclosed herein.

Reference throughout this specification to "one embodiment" or "an embodiment" means that a particular feature, structure, or characteristic described in connection with the embodiment may be included in at least one embodiment disclosed herein. Thus, the appearances of the phrases "in one embodiment" or "in an embodiment" or "according to one embodiment" (or other phrases having similar import) in various places throughout this specification may not necessarily all be referring to the same embodiment. Furthermore, the particular features, structures or characteristics may be combined in any suitable manner in one or more embodiments. In this regard, as used herein, the word "exemplary" means "serving as an example, instance, or illustration". Any embodiment described herein as "exemplary" is not to be construed as necessarily preferred or advantageous over other embodiments. Additionally, the particular features, structures, or characteristics may be combined in any suitable manner in one or more embodiments. Also, depending on the context of discussion herein, a singular term may include the corresponding plural forms and a plural term may include the corresponding singular form. Similarly, a hyphenated term (e.g., "two-dimensional," "pre-determined," "pixel-specific," etc.) may be occasionally interchangeably used with a corresponding non-hyphenated version (e.g., "two dimensional," "predetermined," "pixel specific," etc.), and a capitalized entry (e.g., "Counter Clock," "Row Select," "PIXOUT," etc.) may be interchangeably used with a corresponding non-capitalized version (e.g., "counter clock," "row select," "pixout," etc.). Such occasional interchangeable uses shall not be considered inconsistent with each other.

Also, depending on the context of discussion herein, a singular term may include the corresponding plural forms and a plural term may include the corresponding singular form. It is further noted that various figures (including component diagrams) shown and discussed herein are for illustrative purpose only, and are not drawn to scale. For example, the dimensions of some of the elements may be exaggerated relative to other elements for clarity. Further, if considered appropriate, reference numerals have been repeated among the figures to indicate corresponding and/or analogous elements.

The terminology used herein is for the purpose of describing some example embodiments only and is not intended to be limiting of the claimed subject matter. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

It will be understood that when an element or layer is referred to as being on, "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present. Like numerals refer to like elements throughout. As used herein, the term "and/or" includes any and all combinations of one or more of the associated listed items.

The terms "first," "second," etc., as used herein, are used as labels for nouns that they precede, and do not imply any type of ordering (e.g., spatial, temporal, logical, etc.) unless explicitly defined as such. Furthermore, the same reference numerals may be used across two or more figures to refer to parts, components, blocks, circuits, units, or modules having the same or similar functionality. Such usage is, however, for simplicity of illustration and ease of discussion only; it does not imply that the construction or architectural details of such components or units are the same across all embodiments or such commonly-referenced parts/modules are the only way to implement some of the example embodiments disclosed herein.

Unless otherwise defined, all terms (including technical and scientific terms) used herein have the same meaning as commonly understood by one of ordinary skill in the art to which this subject matter belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

As used herein, the term "module" refers to any combination of software, firmware and/or hardware configured to provide the functionality described herein in connection with a module. For example, software may be embodied as a software package, code and/or instruction set or instructions, and the term "hardware," as used in any implementation described herein, may include, for example, singly or in any combination, an assembly, hardwired circuitry, programmable circuitry, state machine circuitry, and/or firmware that stores instructions executed by programmable circuitry. The modules may, collectively or individually, be embodied as circuitry that forms part of a larger system, for example, but not limited to, an integrated circuit (IC), system on-a-chip (SoC), an assembly, and so forth.

Each of the terms "processing circuit" and "means for processing" is used herein to mean any combination of hardware, firmware, and software, employed to process data or digital signals. Processing circuit hardware may include, for example, application specific integrated circuits (ASICs), general purpose or special purpose central processing units (CPUs), digital signal processors (DSPs), graphics processing units (GPUs), and programmable logic devices such as field programmable gate arrays (FPGAs). In a processing circuit, as used herein, each function is performed either by hardware configured, i.e., hard-wired, to perform that function, or by more general-purpose hardware, such as a CPU, configured to execute instructions stored in a non-transitory storage medium. A processing circuit may be fabricated on a single printed circuit board (PCB) or distributed over several interconnected PCBs. A processing circuit may contain other processing circuits; for example, a processing circuit may include two processing circuits, an FPGA and a CPU, interconnected on a PCB.

As used herein, when a method (e.g., an adjustment) or a first quantity (e.g., a first variable) is referred to as being "based on" a second quantity (e.g., a second variable) it means that the second quantity is an input to the method or affects the first quantity, e.g., the second quantity may be an input (e.g., the only input, or one of several inputs) to a function that calculates the first quantity, or the first quantity may be equal to the second quantity, or the first quantity may be the same as (e.g., stored at the same location or locations in memory as) the second quantity. As used herein, an equations written in normal font has the same meaning as the same equation written in equation font.

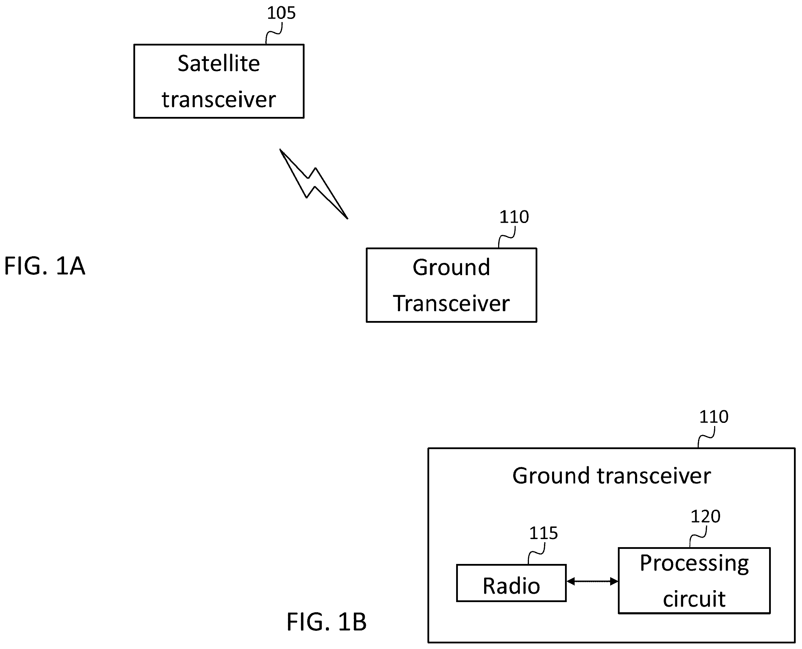

FIG. 1A shows a system including a ground transceiver 110, e.g., a narrow-band internet-of-things (IoT) device, and a satellite 105, which may form, with the ground transceiver 110 (and possibly with other IoT devices) a non-terrestrial network (NTN). In non-terrestrial networks, the received signal to noise may be low, as a result of which the quality of channel response estimates produced by a method for channel estimation may be particularly important. The ground transceiver 110 may include, as shown in FIG. 1B, a radio 115, for transmitting or receiving electromagnetic radiation (e.g.,

radio-frequency or microwave radiation propagating in free space) and a processing circuit 120, for performing various decoding and data processing functions, including channel estimation as discussed herein. Channel estimation may be performed using a narrow-band reference signal (NRS) transmitted by a transmitter (e.g., by the satellite 105) and received by a receiver (e.g., the ground transceiver 110).

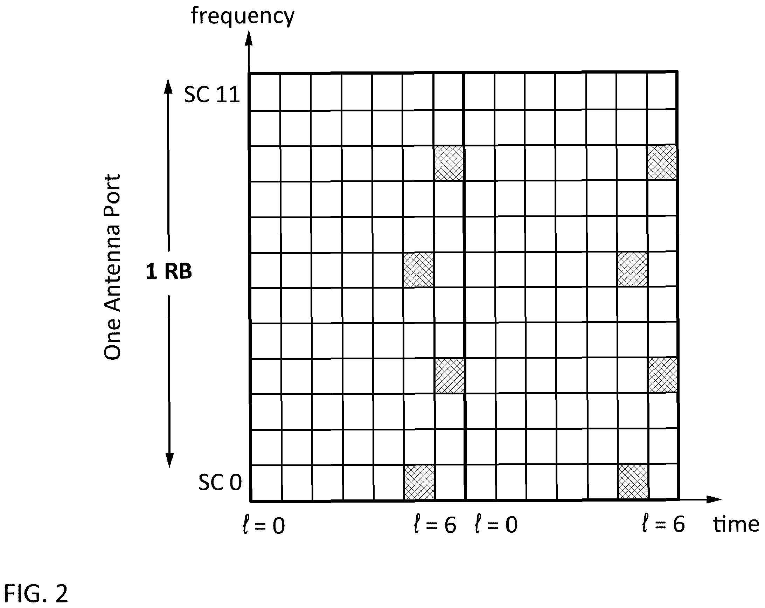

FIG. 2 is a time-frequency diagram showing 12 subcarriers (numbered SC0 through SC11) in the frequency direction (the vertical direction, in FIG. 2) and two slots, in the time direction, each slot including 7 symbol intervals. The narrow-band reference signal may be transmitted in four resource elements per slot, in four different subcarriers, which may be referred to as "pilot subcarriers". As used herein, a "resource element" is a (rectangular) region in time-frequency space defined by a subcarrier and a symbol interval. The receiver may use the signal received during each of these resource elements to perform channel estimation. If a Kalman filter (e.g., a Kalman smoother) is used as an estimator to perform the channel estimation, then the Kalman filter (e.g., the Kalman smoother) may receive a new measurement during each slot, and perform an update (e.g., generate a new estimate) during each slot. As such, a slot may also be referred to as an "update interval". Each slot may include 7 symbols, as shown in FIG. 2, and each slot may have a duration of between 0.0625 milliseconds (ms) and 1 ms.

A Kalman smoother employing state augmentation may be used for non-causal estimation, but a Kalman smoother employing state augmentation may use a state vector in which one or more elements are duplicated, resulting in redundant calculations. As mentioned above, such an estimator may be burdensome to execute and may incur relatively high power consumption. As used herein, a vector is an ordered set of (real or complex) numbers, each of which may be referred to as an "element" of the vector. As such, an element of a vector is one of the numbers of the vector.

In some embodiments, a non-causal estimator, e.g., a Kalman smoother using an extended state (instead of an augmented state), may be used to generate channel estimates for each of the k subcarriers for which channel estimates are generated. In such an embodiment, the Kalman state $x_n$ may be defined as

$$x_n \stackrel{\text{def}}{=} \begin{bmatrix} h_n \\ \vdots \\ h_{n-p+1} \end{bmatrix}$$

where each of the composite elements shown (e.g., $h_n$) is a k x 1 column vector including k complex values, each of the complex values being the channel response (e.g., the estimated channel response) of one subcarrier during the nth update interval. As used herein, a "composite element" of a state vector is a vector of values all corresponding to the same update interval. For example, as mentioned above, $h_n$ is a composite element of the state vector, including k channel estimates (e.g., 4 channel estimates) for k respective subcarriers (e.g., for four subcarriers, as shown in FIG. 2, in which each of the shaded resource elements is in a subcarrier (of the four "pilot" subcarriers) for which channel estimates are calculated). As such, the state vector includes p x k channel estimates, including k channel estimates for each of p update intervals. These p x k channel estimates are formed by vertically concatenating (or "stacking") the p column vectors (each of the column vectors being a k x 1 column vector that may be referred to as a "sub-vector" of $x_n$). As used herein, when no state vector extension (discussed in further detail below) is used, p is (i) the number of update intervals for which the state vector contains channel estimates, and (ii) the number of composite elements in the state vector. When a state vector extension is used, p is the number of non-zero submatrices of $C^{(e)}$. As used herein, the "channel" between a transmitter and a receiver is the environment through which the electromagnetic waves propagate from the transmitter to the receiver (including, e.g., obstacles that may attenuate the signal, and surfaces that may reflect the signal, causing multipath). As used herein, the "channel response" is a model of the behavior of the channel, e.g., the frequency response of the channel or the impulse response of the channel. As used herein, an "estimate" of a quantity is a value (e.g., a number or a vector) that is calculated in such a manner that the calculation is expected to produce a result approximately equal to the quantity. As used herein, a "channel estimate" for a resource element is a complex number that is calculated, based on one or more measurements, in such a manner that the complex number is expected to approximate the true channel response in the resource element. The calculation of a channel estimate may be performed in a manner that reduces the effect of noise or other errors in the measurements. As used herein, each of the terms "state estimate", "state vector estimate", and, unless the context indicates otherwise, "state" and "state vector", means an estimate of the state of the system (e.g., of the channel responses), as represented by a state vector.

In operation, the state may evolve according to a state transition model C and a process noise $z_n$:

$$x_n = Cx_{n-1} + z_n$$

and observations (measurements of the narrowband reference signal (NRS)) $y_n$ may be modeled as being related to the state by an observation model **A**, and modified by observation noise $e_n$:

$$y_n = A^T x_n + e_n$$

The state transition model may have the following form:

$$C = \begin{bmatrix} C_1 & C_2 & \cdots & C_p \\ I_k & 0_k & \cdots & 0_k \\ \vdots & \ddots & & \vdots & \vdots \\ 0_k & \cdots & I_k & 0_k \end{bmatrix},$$

where the top row includes k x k blocks (e.g., $C_1$) and each of the other blocks is also a k x k block (e.g., $I_k$ is a k x k identity matrix). The effect of applying the state transition matrix is to set the most recent sub-vector $h_n$ in the state vector to be equal to a weighted sum of previously estimated states, and to set each of the older sub-vectors equal to the value of the subvector located k elements higher in the state vector (i.e., to set it equal to the value it had during the previous update interval).

The covariance matrix **Q** of the process noise $z_n$ may have the form:

$$Q = \begin{bmatrix} Q' & 0_k & \cdots & 0_k \\ 0_k & 0_k & \cdots & 0_k \\ \vdots & \ddots & & \vdots & \vdots \\ 0_k & \cdots & 0_k & 0_k \end{bmatrix}$$

where, as in the case of **C** each row and column shown consists of k x k blocks.

The matrices **C** and **Q** may be generated, using the Yule-Walker equations, based on channel statistics, e.g., based on the Doppler spread and the delay spread of the channel.

A Kalman filter may be used to estimate the state at update interval (e.g., slot) n, using the following operations, which together form a method referred to herein as Method 1:

    1)

$$\text{Initialize } x_{0|0} = 0_{pk \times 1}, P_{0|0} = \overline{R}_p^{(k)}$$

    2) For i = 0, ... n

        a. Predict next update interval state and estimator error variance using the Kalman prediction equations:

$$x_{i+1|i} = C x_{i|i}.$$

$$P_{i+1|i} = C P_{i|i} C^H + Q.$$

        b. Compute

$$\beta_{i+1} = \left( A P_{i+1|i} A^H + \sigma_e^2 I_k \right)^{-1}$$

$$b_{i+1} = y_{i+1} - A x_{i+1|i}$$

        c. Calculate Kalman gain

$$K_{i+1} = P_{i+1|i}\, A^H \beta_{i+1}$$

d. Estimate next update interval state and estimator error variance using the Kalman update equations:

$$x_{i+1|i+1} = x_{i+1|i} + K_{i+1}\mathbf{b}_{i+1}$$

$$P_{i+1|i+1} = P_{i+1|i} - K_{i+1}AP_{i+1|i}$$

3) Return $x_{n|n}$. $P_{n|n}$

In Method 1 (and elsewhere in this disclosure), $x$ is the state vector, $C$ is the state transition model, $P$ is estimate covariance, $\mathbf{b}$ is the innovation, $\beta$ is the inverse of the innovation covariance, $A$ is the observation model, $y$ is the vector of measurements, $K$ is the Kalman gain, and $H$ denotes the Hermitian conjugate.

A Kalman smoother (which may be considered to be a (non-causal) example of a Kalman filter) may be employed to generate a channel estimate $h_n$ for an update interval $n$. The Kalman smoother may be non-causal if observations are available from an update interval that is in the future relative to update interval $n$, e.g., when observations are available from update interval $n + D$. As such, the Kalman smoother may estimate $x_n$ given the observations $y_1, \dots y_{n+D}$:

$$x_{n|n+D}^{KS} = \mathbb{E}\left[x_n | x_{n-1|n-1}^{KF}, y_n^{nrs}, \dots, y_{n+D}^{nrs}\right]$$

where $x_{n|n+D}^{KS}$ is a Kalman smoother state estimate for sampling interval $n$, e.g., when observations are available from update interval $n + D$.

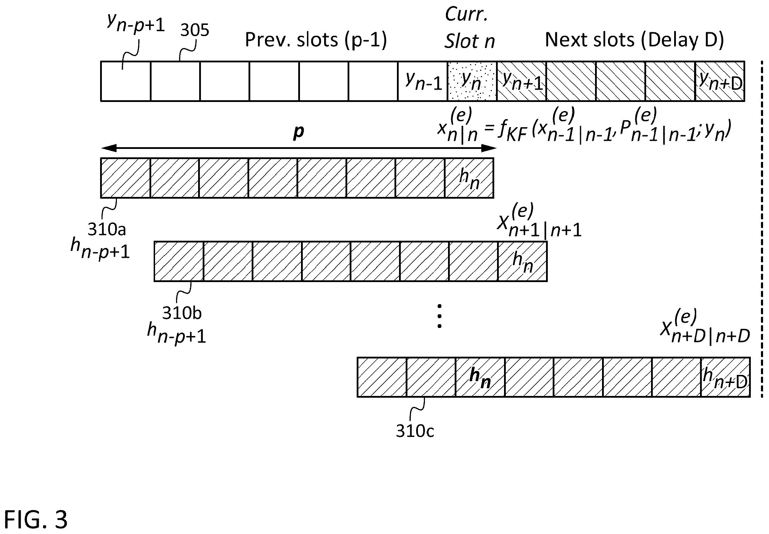

The operation of the Kalman smoother, in an embodiment in which $D$ is less than $p$ - 1, is illustrated in FIG. 3. FIG. 3 shows a sequence of measurements (of the narrowband reference signal) 305, and a plurality of state estimates including the three state estimates 310a, 310b, ... 310c that are explicitly shown. Each state estimate is generated during one update interval (e.g., during one slot); the state estimates are drawn as horizontal vectors because, as discussed above, each state estimate contains a channel response estimate for the present update interval as well as channel response estimates for a plurality of (e.g., $p$ - 1) past update intervals. Each of the squares shown (extending from left to right) within each of the three state estimates 310a, 310b, ... 310c represents a respective composite element of the state vector. As mentioned above, each state estimate includes a plurality of vectors of channel estimates, from different update intervals, stacked into a vector. Each of the state estimates may be calculated using Method 1 (above). For example, the state vector 310a includes p composite elements, $h_n$ through $h_{n-p+1}$, each composite element being a vector of channel estimates. For example, the elements of $h_n$ may be four channel estimates corresponding to the four pilot subcarriers.

The system and method of FIG. 3 may be used for any delay less than or equal to $p$ - 1. In the embodiment of FIG. 3, each predicted state estimate and each updated state estimate is calculated according to the operations of Method 1 (above), and the output (the estimate $h_n$) is obtained during an update interval that is later than update interval n (e.g., during update interval $n + D$). The output (the estimate of $h_n$) is based on measurements obtained after update interval n (in the example of FIG. 3, the output (the estimate of $h_n$) is based on measurements obtained during update interval $n + D$). This is possible in the system of FIG. 3 because the channel estimates corresponding to the channel response at a time in the past remain part of the state vector containing p update intervals, being (i) shifted down (by k places) during each update (as a result of the identity matrices below the diagonal of $C$) and also being (ii) updated during each sample interval according to the state update equation (discussed in further detail below). In the embodiment of FIG. 3, the estimate $h_{n+D}$ is a Kalman filter estimate, and the estimate $h_n$ (which is within the same state vector $(x_{n+D|n+D}^{(e)})$ as $h_{n+D}$) is a Kalman smoother estimate, because it is an estimate of a quantity that existed in the past (the channel response during update interval n). In such an embodiment, the state vector may have (i) kp elements (e.g., if the delay is less than or equal to $p$ - 1) or (ii) $k(D + 1)$ elements (e.g., if the delay is greater than $p$ - 1, as discussed below), which is, in either case, fewer elements than it would have in a Kalman smoother employing state augmentation (e.g., fewer than $k(D + 1)p$ elements. As used herein, a Kalman filter is an estimator that uses a series of measurements to estimate (e.g., to calculate an approximate value of) the state of a system, as represented by a state vector. A Kalman filter generates such a state estimate for each update interval when a measurement for the update interval is received. A Kalman filter estimate is an estimate generated (e.g., calculated) by a Kalman filter. A Kalman smoother is also an estimator that uses a series of measurements to estimate (e.g., to calculate an approximate value of) the state of a system, as represented by a state vector. A Kalman smoother generates an estimate for an update interval after a measurement for a subsequent update interval is received. A Kalman smoother estimate is an estimate generated (e.g., calculated) by a Kalman smoother.

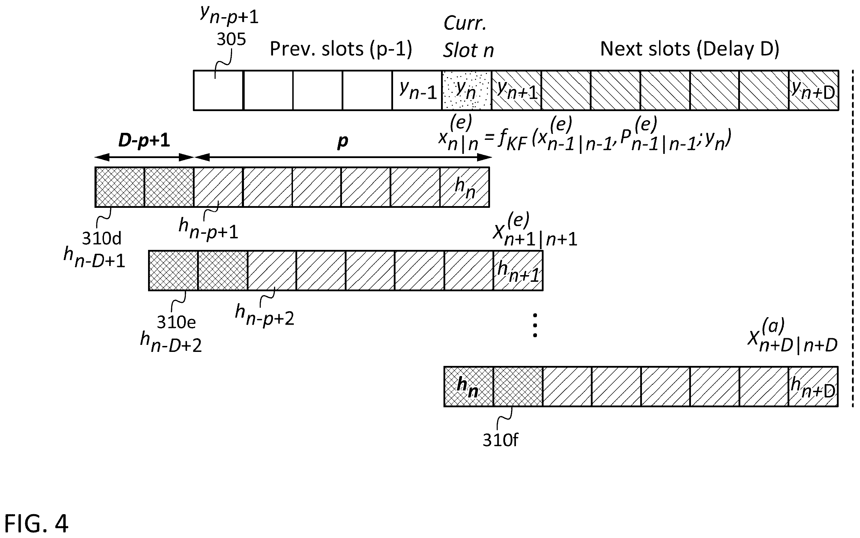

FIG. 4 shows an embodiment for performing Kalman smoothing with a delay D that is greater than p - 1. FIG. 4 shows a sequence of measurements (of the narrowband reference signal) 305, and a plurality of state estimates including the three state estimates 310d, 310e, 310f that are explicitly shown. Each state estimate is generated during one update interval (e.g., during one slot); the state estimates are drawn as horizontal vectors because, as discussed above, each state estimate contains a channel response estimate for the present update interval as well as channel response estimates for a plurality of past update intervals. In the embodiment of FIG. 4, each state estimate is calculated according to the operations of Method 2 (below), and the output (the estimate $h_n$) is obtained during an update interval that is later than update interval n (during update interval $n + D$). The output (the estimate of $h_n$) is based on measurements obtained after update interval n (in the example of FIG. 4, the output (the estimate of $h_n$) is based on measurements obtained during update interval $n + D$). In the embodiment of FIG. 4, the state vector is extended to be of size $p + \varepsilon$ where the extension size $\varepsilon$ is given by

$\varepsilon = max(0, D - p + 1)$. This extending of the state vector causes the composite element $h_n$ to be in the state vector during the (n+D)th update interval.

In either case the size of the state vector is $k(max(p, D + 1))$, which less than in the case of Kalman smoother employing state augmentation (in which case the size of the state vector *is $k(D + 1)p$).*

The extended state vector may be written:

$$x_n^{(e)} \overset{\text{def}}{=} \begin{bmatrix} h_n \\ h_{n-1} \\ \vdots \\ h_{n-p-\varepsilon+1} \end{bmatrix}$$

As discussed in further detail below, the system and method of FIG. 4 may differ from that of a Kalman filter with a state vector that extends over $p + \varepsilon$ update intervals (e.g., a state vector of size $k(p + \varepsilon)$ ) in that certain aspects of the Kalman filter processing are, in the embodiment of FIG. 4, performed only for p state elements, resulting in a system having lower computational complexity than a Kalman filter with a state vector of size $k(p + \varepsilon)$.

For example, the state transition model may have zeros in the top row in elements corresponding to the $\varepsilon$ elements added to the state vector, as a result of which these added states do not affect the current channel estimate in the prediction equation of the Kalman filter.

The computations may proceed as follows, for the embodiment of FIG. 3 and for the embodiment of FIG. 4. An extended state transition model $C^{(e)}$ is defined as follows:

$$C^{(e)} = \begin{bmatrix} \overbrace{\begin{matrix} C_1 & C_2 & \cdots & C_p \\ I_k & 0_k & \cdots & 0_k \\ \vdots & \ddots & \vdots & \vdots \\ 0_k & \cdots & I_k & 0_k \end{matrix}}^{p} & \overbrace{\begin{matrix} 0_k & \cdots & 0_k \\ \vdots & \ddots & \vdots \\ \vdots & & \vdots \\ 0_k & \cdots & 0_k \end{matrix}}^{\varepsilon} \\ \begin{matrix} 0_k & \cdots & 0_k & I_k \\ \vdots & \ddots & \vdots & \vdots \\ 0_k & \cdots & 0_k & 0_k \end{matrix} & \begin{matrix} 0_k & \cdots & 0_k \\ \vdots & \ddots & \vdots \\ \cdots & I_k & 0_k \end{matrix} \end{bmatrix} = \begin{bmatrix} C & 0_{p\times\varepsilon} \\ 0_{\varepsilon\times(p-1)} & I_\varepsilon & 0_{\varepsilon\times 1} \end{bmatrix}$$

This extended state transition model has $\varepsilon$ zero sub-matrices ($0_k$) in the top row, which has the effect, mentioned above, that the $\varepsilon$ added states do not affect the current channel estimate in the state prediction equation.

An extended process noise covariance matrix $Q^{(e)}$ is defined as follows:

$$Q^{(e)} = diag(Q', \overbrace{0_k, \ldots, 0_k}^{p-1}, \overbrace{0_k, \ldots, 0_k}^{\varepsilon}) = \begin{bmatrix} Q & 0_{p\times\varepsilon} \\ 0_{\varepsilon\times p+\varepsilon} \end{bmatrix}$$

A Kalman filter algorithm may then be applied. The Kalman filter update equation (or "estimation equation") may then be written:

$$x_{n+D|n+D}^{(e)} = C^{(e)}x_{n+D-1|n+D-1}^{(e)} + K_{n+D}^{(e)}b_{n+D}$$

which is of the form:

$$\mathbf{x}_{n+D|n+D}^{(e)} = \begin{bmatrix} \mathbf{C}x_{n+D-1|n+D-1} \\ \mathbf{x}_{n+D-1|n+D-1}^{(e)}(\boldsymbol{\phi}_k^{p-1,p+\varepsilon-1}) \end{bmatrix} + \begin{bmatrix} \mathbf{K}_{n+D} \\ \mathbf{K}_{n+D}^{(e)}(\boldsymbol{\phi}_k^{p,p+\varepsilon},:) \end{bmatrix} b_{n+D} = \begin{bmatrix} \mathbf{x}_{n+D|n+D} \\ \mathbf{x}_{n+D|n+D}^{(e)}(\boldsymbol{\phi}_k^{p,p+\varepsilon}) \end{bmatrix}$$

This may be seen to include two rows, an upper row which corresponds to a Kalman filter update equation (and which generates $x_{n+D|n+D}$ based on $Cx_{n+D-1|n+D-1}$, $K_{n+D}$ and $b_{n+D}$, and a lower row which corresponds to the Kalman filter update equation for the extended part of the state vector. In this update equation, $K_{n+D}^{(e)}$ is the extended Kalman gain, the calculation of which is given below.

The operation of the extended Kalman filter may proceed according to the following sequence of operations, which may be referred to herein as Method 2. The steps of Method 2 correspond to analogous steps of Method 1 as follows.

Step 2a of Method 2 corresponds to the first row of the equation for $\mathbf{x}_{n+D|n+D}^{(e)}$ above, applied to all Method 1 equations.

Step 3a of Method 2 is an equation for the partial Kalman gain, a new parameter with no correspondence in Method 1. This parameter is defined for ease of notation. Step 3b of Method 2 corresponds to step 2c of Method 1. Step 3c of Method 2 corresponds to 2d-2 combined with 2a-2 of Method 1. Step 3d of Method 2 corresponds to Step 2d-1 combined with Step 2a-1 of Method 1. Method 2 may include the following steps:

1) Initialize extended states

$$x_{0|0}^{(e)} = \mathbf{0}_{(p+\varepsilon)k \times 1}, \, P_{0|0}^{(e)} = \overline{R}_{p+\varepsilon}^{(k)},$$

2) Run Standard KF using n+D measurements $y_1, \dots y_{n+D}$ (Method 1).

a) Obtain delayed KF states $x_{n+D|n+D}$, $P_{n+D|n+D}$, $K_{n+D}$, $\beta_{n+D}$, $b_{n+D}$.
b)        Store        previous        (step        n+D-1)        extended        states.

$$x_{n+D-1|n+D-1}^{(e)}, P_{n+D-1|n+D-1}^{(c)} \in \mathbb{R}^{(p+\varepsilon-1)k \times pk}, \, P_{n+D-1|n+D-1}^{(d)} \in \mathbb{R}^{(p+\varepsilon)k \times k}$$

3) Initialize state-extension smoother

$$x_{n+D|n+D}^{(e)}(\boldsymbol{\phi}_{0,p}^k) = x_{n+D|n+D},$$

$$P_{n+D|n+D}^{(c)}(\boldsymbol{\phi}_{0,p}^k,:) = P_{n+D|n+D},$$

$$P_{n+D|n+D}^{(d)}(\boldsymbol{\phi}_{0,p}^k,:) = k - blkdiag(P_{n+D|n+D}),$$

$$K_{n+D}^{(e)}(\boldsymbol{\phi}_{0,p}^k) = K_{n+D}$$

a) Compute

$$\Gamma_{n+D} = P_{n+D-1|n+D-1}^{(c)}(\boldsymbol{\phi}_{p-1,p+\varepsilon-1}^k,:)C^H$$

b) Measure Kalman Gain $K_{n+D}^{(i)}$

$$K_{n+D}^{(e)}(\phi_{p,p+\varepsilon}^k,:) = \Gamma_{n+D}A^H\beta_{n+D}.$$

c) Measure error covariance elements $P_{n+D-1|n+D-1}^{(c)}$, $P_{n+D|n+D}^{(d)}$

$$P_{n+D|n+D}^{(c)}(\phi_{p,p+\varepsilon-1}^k,:)$$
$$= \Gamma_{n+D}(\phi_{0,\varepsilon-1}^k,:) - \Gamma_{n+D}(\phi_{0,\varepsilon-1}^k,:)A^H K_{n+D}^{(e)}(\phi_{0,p}^k,:)^H$$

$$P_{n+D|n+D}^{(d)}(\phi_{p,p+\varepsilon}^k,:)$$
$$= P_{n+D-1|n+D-1}^{(d)}(\phi_{p-1,p+\varepsilon-1}^k,:)$$
$$- \Gamma_{n+D}A^H \odot_k K_{n+D}^{(e)}(\phi_{p,p+\varepsilon}^k,:)$$

d) Update smoother $x_{n+D|n+D}^{(1)}$

$$x_{n+D|n+D}^{(e)}(\phi_{p,p+\varepsilon}^k) = x_{n+D-1|n+D-1}^{(e)}(\phi_{p-1,p+\varepsilon-1}^k) + K_{n+D}^{(e)}(\phi_{p,p+\varepsilon}^k,:)b_{n+D}$$

4) Return $h_{n|n+D} = x_{n+D|n+D}^{(e)}(\phi_{D-1,D}^k)$, $P_{n|n+D} = P_{n+D-1|n+D-1}^{(d)}(\phi_{D-1,D}^k,:)$

In Method 2, and elsewhere in this disclosure, $\phi_{i,j}^k = [ik+1:jk]$, $\odot$ is an element-wise product, and $\Gamma$ is the partial Kalman gain, used to calculate the Kalman gain, and in the update equation for the estimate covariance. The reduced estimate covariance matrices denoted by the superscripts (c) and (d) are given by

$$P_{n+D|n+D}^{(c)} = P_{n+D|n+D}^{(e)}(\phi_{0,p+\varepsilon-1}^k, \phi_{0,p}^k)$$

$$P_{n+D|n+D}^{(d)} = k - blkdiag\left(P_{n+D|n+D}^{(e)}\right)$$

where the notation *k - blkdiag* is defined as follows:

$$k - blkdiag(G) = \begin{bmatrix} G(\phi_{0,1}^k, \phi_{0,1}^k) \\ G(\phi_{1,2}^k, \phi_{1,2}^k) \\ \vdots \\ G(\phi_{m-1,m}^k, \phi_{m-1,m}^k) \end{bmatrix}$$

It may be seen that the reduced estimate covariance matrices have fewer elements than the $((p+\varepsilon)k)^2$ elements that the full extended estimate covariance matrix, and storage and computational savings may be realized accordingly.
In some embodiments, a further reduction in computational complexity is achieved, using a process that may be referred to as a "per subcarrier process", by estimating the channel response for each subcarrier separately instead of estimating it jointly for all of the subcarriers in which the narrowband reference signal is transmitted. For one of the subcarriers, referred to herein as subcarrier *l*, the channel estimation may proceed as follows. For the remaining k-1 subcarriers the channel estimation may proceed in the same manner.
State evolution is given by

$$x_n^{(l)} = Cx_{n-1}^{(l)} + z_n^{(l)}$$

$Q$ and $C$ may be obtained from channel statistics using the Yule-Walker equations (as in the other embodiments disclosed herein) and may be given by

$$C = \begin{bmatrix} c_1 & c_2 & \ldots & c_p \\ 1 & 0 & \ldots & 0 \\ \vdots & \ddots & \vdots & \vdots \\ 0 & \ldots & 1 & 0 \end{bmatrix}$$

$$Q = diag(q', 0, \ldots, 0)$$

with the elements shown (e.g., $c_1$) being scalars instead of k x k sub-matrices as in the case of joint estimation.

The observations are given by

$$y_n^{(l)} = a^T x_n^{(l)} + e_n^{(l)},$$

where $a$ is the observation matrix for a single subcarrier.

The per-SC Kalman smoother estimation may then be performed according to the following method, referred to herein as Method 3:

1) Initialize extended states

$$x_{0|0}^{(l,e)} = 0_{(p+\varepsilon)\times 1}, l \in [1:k], P_{0|0}^{(e)} = \overline{R}_{p+\varepsilon}^{(1)},$$

2) Run per-subcarrier Kalman filter (e.g., according to Method 1) using $n + D$ measurements $y_1, \ldots y_{n+D}$.

    a. Obtain delayed Kalman filter (KF) states $x_{n+D|n+D}^{(l)}$, $b_{n+D}^{(l)}$, $l \in [1:k]$, $P_{n+D|n+D}$, $k_{n+D}$, $\beta_{n+D}$.

    b. Store previous (step n+D-1) extended states. $x_{n+D-1|n+D-1}^{(l,e)} \in \mathbb{C}^{p+\varepsilon \times 1}$,

$$P_{n+D-1|n+D-1}^{(c)} \in \mathbb{R}^{p+\varepsilon-1 \times p}, \quad p_{n+D-1|n+D-1}^{(d)} \in \mathbb{R}^{p+\varepsilon \times 1}$$

    where $p$ is a vector subset of the covariance matrix $P$.

3) Initialize state-extension smoother

$$x_{n+D|n+D}^{(l,e)}(1:p) = x_{n+D|n+D}^{(l)}, l \in [1:k],$$

$$P_{n+D|n+D}^{(c)}(1:p, :) = P_{n+D|n+D},$$

$$p_{n+D|n+D}^{(d)}(1:p) = 1 - blkdiag(P_{n+D|n+D}),$$

$$k_{n+D}^{(e)}(1:p) = k_{n+D}.$$

    a. Compute

$$\Gamma_{n+D} = P_{n+D-1|n+D-1}^{(c)}(p: p + \varepsilon - 1, :)C^H$$

b. Measure Kalman Gain $K^{(i)}_{n+D}$

$$k^{(e)}_{n+D}(p+1:p+\varepsilon) = \Gamma_{n+D}a\beta_{n+D}.$$

c. Measure extended error covariance elements $P^{(e)}_{n+D|n+D}(p:p,1:p), p^{(d)}_{n+D|n+D}$

$$P^{(c)}_{n+D-1|n+D-1}(p+1:p+\varepsilon-1,:)$$
$$= \Gamma_{n+D}(1:\varepsilon-1,:) - \Gamma_{n+D}(1:\varepsilon-1,:)ak^{(0)}_{n+D}{}^{H}$$

$$p^{(d)}_{n+D|n+D}(p+1:p+\varepsilon) = p^{(d)}_{n+D-1|n+D-1}(p:p+\varepsilon-1) - \Gamma_{n+D}a\odot_1 k^{(1)}_{n+D}$$

4) For $l = 1, \dots k$ Update smoother $x^{(l,1)}_{n+D|n+D}$

$$x^{(l,e)}_{n+D|n+D}(p+1:p+\varepsilon) = x^{(l,e)}_{n+D-1|n+D-1}(p:p+\varepsilon-1) + k^{(1)}_{n+D}b_{n+D}$$

5)

$$\text{Return } h^{(l)}_{n|n+D} = x^{(l,e)}_{n+D|n+D}(D+1), l \in [1:k], P_{n|n+D} = p^{(d)}_{n+D-1|n+D-1}(D+1)$$

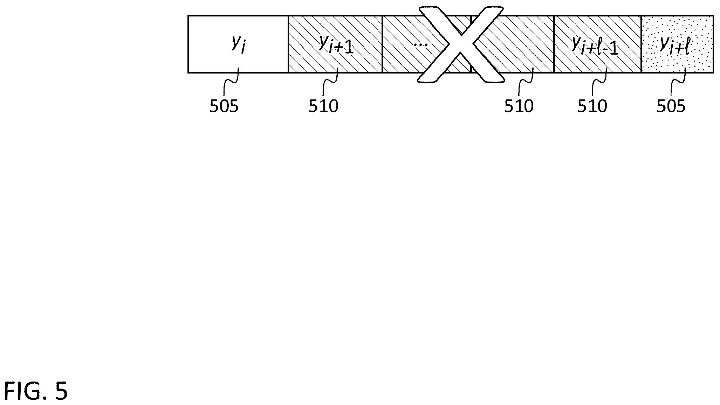

Referring to FIG. 5, the transmission received by the receiver may on occasion lack a narrowband reference signal. FIG. 5, for example, shows a plurality of update intervals (e.g., slots) including a first plurality of update intervals 505, within which a measurement has been made (e.g., within which a narrowband reference signal has been received), and a second plurality of update intervals 510, within which no measurement has been made (e.g., within which a narrowband reference signal has not been received). For example, channel fading may prevent the reception of the narrowband reference signal, or it may be absent from one or more slots. Such a lack of one or more consecutive measurements may be accommodated by using a modified state transition model to bridge the gap in the measurements, the modified state transition model being equal to the state transition model raised to the power of the number of missed measurements. For example, the following method, referred to herein as Method 4, may be used for a Kalman filter in these circumstances.

a. Apply $\ell$ iterations of predictions for $i + \ell^{th}$ state and error variance

$$x_{i+\ell|i} = C^{\ell}x_{i|i}.$$

$$P_{i+\ell|i} = C^{\ell}P_{i|i}C^{\ell H} + \sum_{j=0}^{\ell-1} C^{j}QC^{jH}.$$

b. Compute

$$\beta_{i+\ell} = \left(AP_{i+\ell|i}A^{H} + \sigma_e^2 I_k\right)^{-1}$$

$$b_{i+\ell} = y_{i+\ell} - Ax_{i+\ell|i}$$

c. Measure Kalman Gain

$$K_{i+\ell} = P_{i+\ell|i} A^{H}\beta_{i+\ell}$$

d. Estimate next slot state and estimator error variance using next available measurement $y_{i+\ell}$

$$x_{i+\ell|i+\ell} = x_{i+\ell|i} + K_{i+\ell}\mathbf{b}_{i+\ell}$$

$$P_{i+\ell|i+\ell} = P_{i+\ell|i} - K_{i+\ell}AP_{i+\ell|i}$$

This approach may also be used to extend Method 2 to the situation in which $\ell$ - 1 measurements have been missed. The following method, referred to herein as Method 5, may be used for this purpose.

1) Initialize extended states:

$$x_{0|0}^{(e)} = \mathbf{0}_{(p+\varepsilon)k\times1}, P_{0|0}^{(e)} = \overline{R}_{p+\varepsilon}^{(k)},$$

where $\overline{R}_p^{(k)}$ is the covariance of channel state vector of size p* k, p is the number of stacked intervals and k is the dim of each interval.

$$\overline{R}_p^{(k)} = E\left[x.x^H\right]$$

$$\overline{R}_{p+\varepsilon}^{(k)} = E\left[x^{(e)}.x^{(e)H}\right]$$

$$\overline{R}_p^{(1)} = E\left[x^{(l)}.x^{(l)H}\right]$$

for per-SC $l \in [1,..,k]$.

2) Run Standard KF using $n + D$ measurements $y_1, ... y_{n+D}$ (Method 1).

    a. Obtain delayed KF states $x_{n+D|n+D}, P_{n+D|n+D}, K_{n+D}, \beta_{n+D}, b_{n+D}.$

    b. Store previous (step $n + D$ - 1) extended states. $x_{n+D-1|n+D-1}^{(e)}, P_{n+D-1|n+D-1}^{(c)}, P_{n+D-1|n+D-1}^{(d)}$

3) Initialize state-extension smoother

$$x_{n+D|n+D(\phi_{0,p}^k),}^{(e)} = x_{n+D|n+D}$$

$$P_{n+D|n+D}^{(c)}(\phi_{0,p}^k,:) = P_{n+D|n+D},$$
$$P_{n+D|n+D}^{(d)}(\phi_{0,p}^k,:) = k - blkdiag(P_{n+D|n+D}),$$

$$K_{n+D}^{(e)}(\phi_{0,p}^k) = K_{n+D}$$

    a. Compute

$$\Gamma_{n+D} = \begin{cases} P_{n+D-1|n+D-1}^{(c)}(\phi_{p-\ell-1,p+\varepsilon-\ell}^k,:)C^H, & \ell \leq p, \ell \leq \varepsilon \\ P_{n+D-1|n+D-1}^{(c)}(\phi_{p-\varepsilon-1,p}^k,:)C^H, & \ell \leq p, \ell > \varepsilon \\ C^{\ell-p}(\phi_{0,\varepsilon}^k,:)P_{n+D-1|n+D-1}^{(c)}(\phi_{0,p}^k,:)C^H, & \ell > p, \end{cases}$$

b. Measure extended Kalman Gain $\boldsymbol{K}_{n+D}^{(e)}$

$$\boldsymbol{K}_{n+D}^{(e)}(\boldsymbol{\phi}_{p,p+\varepsilon}^{k},:) = \boldsymbol{\Gamma}_{n+D}\boldsymbol{A}^{H}\boldsymbol{\beta}_{n+D}.$$

c. Measure extended error covariance elements $\boldsymbol{P}_{n+D-1|n+D-1}^{(c)}$, $\boldsymbol{P}_{n+D|n+D}^{(d)}$

$$\boldsymbol{P}_{n+D-1|n+D-1}^{(c)}(\boldsymbol{\phi}_{p,p+\varepsilon-1}^{k},:) = \boldsymbol{\Gamma}_{n+D}(\boldsymbol{\phi}_{0,\varepsilon-1}^{k},:) - \boldsymbol{\Gamma}_{n+D}(\boldsymbol{\phi}_{0,\varepsilon-1}^{k},:)\boldsymbol{A}^{H}\boldsymbol{K}_{n+D}^{(e)}(\boldsymbol{\phi}_{0,p}^{k},:)^{H}$$

$$\boldsymbol{P}_{n+D|n+D}^{(d)}\left(\boldsymbol{\phi}_{p,p+\varepsilon}^{k},:\right) = \begin{cases} \boldsymbol{P}_{n+D-1|n+D-1}^{(d)}\left(\boldsymbol{\phi}_{p-\ell,,p+\varepsilon-\ell}^{k},:\right) - \boldsymbol{\Gamma}_{n+D}\boldsymbol{A}^{H}\odot_{k}\boldsymbol{K}_{n+D}^{(e)}(\boldsymbol{\phi}_{p,p+\varepsilon}^{k},:), & \ell \le p, \ell \\ \boldsymbol{P}_{n+D-1|n+D-1}^{(d)}\left(\boldsymbol{\phi}_{p-\varepsilon,p}^{k},:\right) - \boldsymbol{\Gamma}_{n+D}\boldsymbol{A}^{H}\odot_{k}\boldsymbol{K}_{n+D}^{(e)}(\boldsymbol{\phi}_{p,p+\varepsilon}^{k},:), & \ell \le p, \ell \\ k - blkdiag\left(\boldsymbol{C}^{\ell-p}(\boldsymbol{\phi}_{0,\varepsilon}^{k},:)\boldsymbol{P}_{n+D-1|n+D-1}^{(c)}(\boldsymbol{\phi}_{0,p}^{k},:)\boldsymbol{C}^{\ell-p}(\boldsymbol{\phi}_{0,\varepsilon}^{k},:)^{H}\right) \\ \qquad -\boldsymbol{\Gamma}_{n+D}\boldsymbol{A}^{H}\odot_{k}\boldsymbol{K}_{n+D}^{(e)}(\boldsymbol{\phi}_{p,p+\varepsilon}^{k},:), & \ell > p, \end{cases}$$

d. Update extended state $x_{n+D|n+D}^{(e)}$

$$x_{n+D|n+D}^{(e)}\left(\boldsymbol{\phi}_{p,p+\varepsilon}^{k}\right) = \begin{cases} x_{n+D-1|n+D-1}^{(e)}(\boldsymbol{\phi}_{p-\ell,,p+\varepsilon-\ell}^{k}) + \boldsymbol{K}_{n+D}^{(e)}(\boldsymbol{\phi}_{p,p+\varepsilon}^{k},:)\mathbf{b}_{n+D}, & \ell \le p, \ell \le \\ x_{n+D-1|n+D-1}^{(e)}(\boldsymbol{\phi}_{p-\varepsilon,p}^{k}) + \boldsymbol{K}_{n+D}^{(e)}(\boldsymbol{\phi}_{p,p+\varepsilon}^{k},:)\mathbf{b}_{n+D}, & \ell \le p, \ell > \\ \boldsymbol{C}^{\ell-p}(\boldsymbol{\phi}_{0,\varepsilon}^{k},:)x_{n+D-1|n+D-1}^{(e)}(\boldsymbol{\phi}_{0,p}^{k}) + \boldsymbol{K}_{n+D}^{(e)}(\boldsymbol{\phi}_{p,p+\varepsilon}^{k},:)\mathbf{b}_{n+D}, & \ell > p, \end{cases}$$

4) Return $\boldsymbol{h}_{n|n+D} = x_{n+D|n+D}^{(e)}\left(\boldsymbol{\phi}_{D-1,D}^{k}\right)$, $\boldsymbol{P}_{n|n+D} = \boldsymbol{P}_{n+D-1|n+D-1}^{(d)}\left(\boldsymbol{\phi}_{D-1,D}^{k},:\right)$

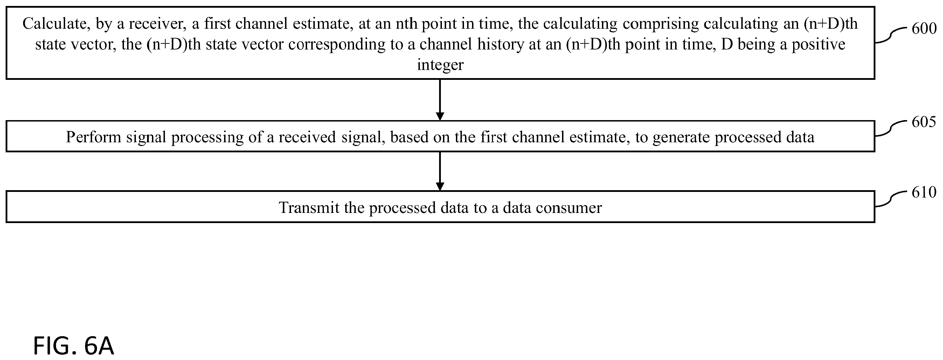

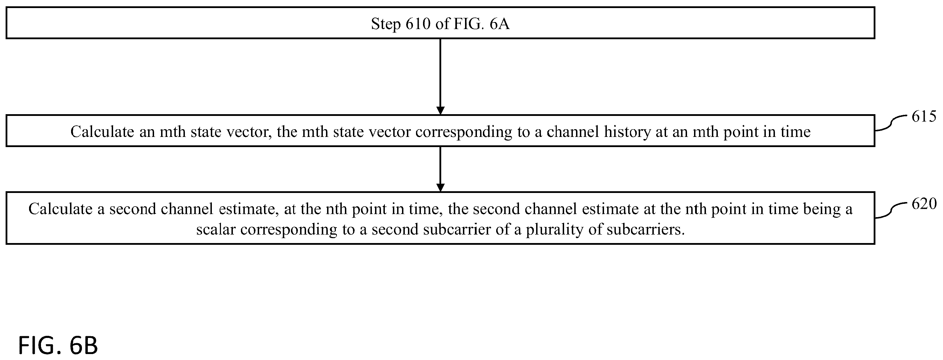

FIGs. 6A and 6B show a flowchart of a method for channel estimation, in some embodiments. Although FIGs. 6A and 6B illustrate various operations in such a method, embodiments according to the present disclosure are not limited thereto. For example, according to some embodiments, such a method may include additional operations or fewer operations, or the order of operations may vary (unless otherwise explicitly stated or implied) without departing from the spirit and scope of embodiments according to the present disclosure.

The method may include: calculating, at 600, by a receiver, a first channel estimate, at an nth point in time, the calculating including calculating an (n+D)th state vector (e.g., a predicted (n+D)th state vector), the (n+D)th state vector corresponding to a channel history at an (n+D)th point in time, D being a positive integer. For example, the first channel estimate may be calculated as an element of an updated state vector. The first channel estimate may be an estimate of the channel response during the nth update interval, and the state vector may correspond to (e.g., may be calculated for, and may include measurements from) the (n+D)th update interval. The number n may be an integer index used to identify the update interval, which may be a signed integer, or which may by convention be a positive or non-negative integer. The method may further include performing, at 605, signal processing of a received signal, based on the first channel estimate, to generate processed data; and transmitting, at 610, the processed data to a data consumer. As an example of signal processing, the first channel estimate may be used to calculate log likelihood ratios for the received symbols, which may in turn be used to perform soft-decision forward-error-correction-code decoding, to generate a stream of data, which may be referred to as processed data. As used herein, a data consumer may be any circuit or process that receives the processed data. For example, the data consumer may be an application such as a telephony application, a short message service (SMS) application, or a web browser.

For example, as discussed above in the context of FIGs. 3 and 4, in some embodiments, a channel estimate $\boldsymbol{h}_n$, at

an nth point in time, may be generated, by a Kalman smoother, as part of an (n+D)th updated state vector (e.g., $x_{n+D|n+D}^{KS}$ ). The (n+D)th updated state vector may be calculated based on a predicted (n+D)th state vector (e.g., $x_{n+D|n+D-1}^{KS}$ ), with D being a positive integer, i.e., the filter may be non-causal, and it may generate the estimated channel response for a time in the past (e.g., n may be in the past when the (n+D)th update interval is processed). Once a channel estimate is obtained, it may be used to process the signal received during the update interval (e.g., during the slot), generating processed data. The received signal may be amplified, downconverted, and sampled by a radio-frequency (RF) front end, to generate a plurality of complex samples (each complex sample corresponding to an in-phase sample and a quadrature sample). The processing may involve, for example, using the estimated channel response to calculate a log-likelihood ratio corresponding to each sample and performing forward-error correction estimation to generate the processed data. The processed data may then be transmitted to a data consumer, which may be, for example, an application running on the IoT device that has received the signal. In some embodiments, the denoised narrowband reference signal which may include (e.g., consist of) the channel response estimates may be the product of the methods disclosed herein, and the method may include transmitting the denoised narrowband reference signals to a consumer of denoised narrowband reference signals, such as frequency and time domain interpolators (FDI/TDI). Such circuits may be used to interpolate using denoised NRS at REs corresponding to non-NRS locations. The final product after FDI/TDI may be the denoised channel (channel estimation CE) at all REs that can be used by SLP (symbol level processing).

The (n+D)th state vector may include elements from p update intervals (e.g., in the embodiment of FIG. 3). The (n+D)th state vector may further include elements from additional update intervals, e.g., as shown in the embodiment of FIG. 4, the (n+D)th state vector may include elements from D+1 update intervals. The first channel estimate at the nth point in time may include an element for each of k subcarriers, k being a positive integer. For example, as illustrated in FIG. 2, each channel estimate may include an element for each of four subcarriers (which may be referred to as "pilot subcarriers"). The (n+D)th state vector may have fewer than kp(D+1) elements. For example, as discussed above in the context of FIGs. 3 and 4, the size of the state vector may be $k(max(p, D + 1))$, which less than kp(D+1).

In some embodiments, the (n+D)th state vector has fewer than p(D+1)/2 elements. In some embodiments, the (n+D)th state vector has fewer than 2k(D+1) elements or fewer than 2kp elements. For example, as discussed above in the context of FIGs. 3 and 4, the (n+D)th state vector may have $k(max(p, D + 1)$ elements, which may be fewer than 2kp elements or fewer than 2k(D+1) elements.

In some embodiments, the method further includes calculating, at 615, an mth state vector (e.g., a predicted mth state vector), the mth state vector corresponding to a channel history at an mth point in time; the calculating of the mth state vector including calculating a product of a state transition model raised to the power j and an updated (m-j)th state vector, the updated (m-j)th state vector corresponding to a channel history at an (m-j)th point in time. In some embodiments, the receiver lacks measurements for a plurality of update intervals between the (m-j)th point in time and the mth point in time. For example, as discussed above in the context of FIG. 5, if the receiver lacks measurements during a number of update intervals (e.g., j-1 update intervals), the Kalman prediction equation for the state vector may be modified by multiplying the previously updated state vector by the state transition model raised to the power j (instead of multiplying the previously updated state vector by the state transition model, as is done in the Kalman prediction equation for the state vector of, e.g., Method 1).

In some embodiments, the first channel estimate at the nth point in time is a vector including an element for each of a plurality of subcarriers. For example, as discussed above, the state vector may be formed by stacking channel response vectors to form a column vector, each of the channel response vectors including a channel response for each of k subcarriers.

In some embodiments the first channel estimate is a scalar corresponding to a first subcarrier of a plurality of subcarriers, and the method further includes calculating, at 620, a second channel estimate, at the nth point in time, the second channel estimate at the nth point in time being a scalar corresponding to a second subcarrier of a plurality of subcarriers. For example, as discussed above, in the context of Method 3, in some embodiments the Kalman smoother using an extended state vector may be configured to generate channel estimates for only one subcarrier at a time, to reduce the computational burden on the hardware in which the Kalman smoother is implemented.

In some embodiments, the method further includes (in a system for generating channel estimates for only one subcarrier at a time) calculating an mth state vector (e.g., a predicted mth state vector), the mth state vector corresponding to a channel history at an mth point in time; the calculating of the mth state vector including calculating a product of a state transition model raised to the power j and an updated (m-j)th state vector, the updated (m-j)th state vector corresponding to a channel history at an (m-j)th point in time. In some embodiments, the receiver lacks measurements for a plurality of update intervals between the (m-j)th point in time and the mth point in time. For example the method for bridging a gap in the measurements available to the receiver may also be employed, as mentioned above, for a Kalman smoother that estimates the channel response for one subcarrier at a time.

Some embodiments improve the functioning of a wireless receiver and improve the technology of wireless communications. For example, a Kalman smoother of embodiments disclosed herein may impose less of a computational burden on hardware in which it is implemented than a Kalman smoother employing state augmentation. Further, a Kalman smoother of embodiments disclosed herein may consume less power than a Kalman smoother employing state augmentation.

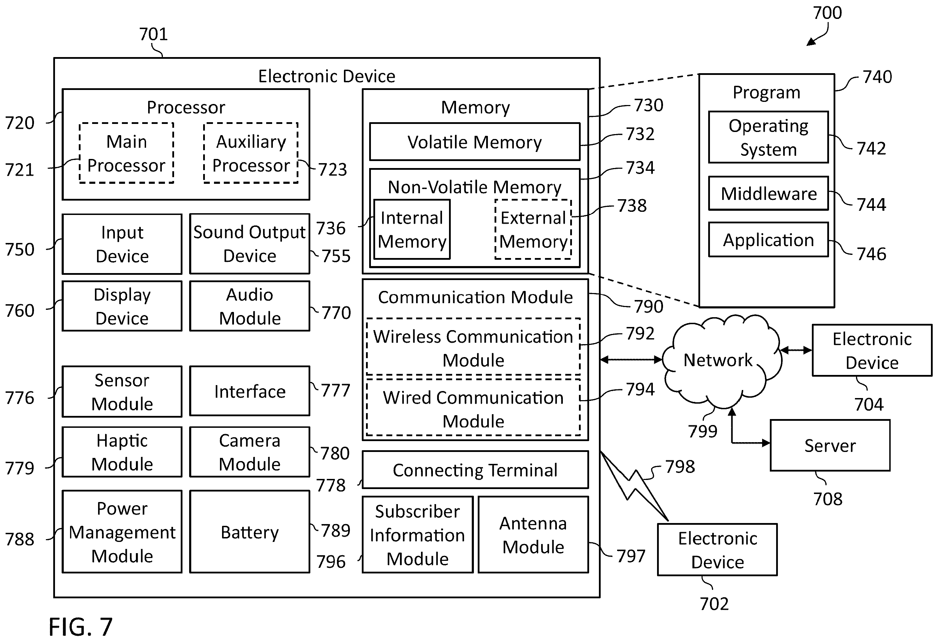

FIG. 7 is a block diagram of an electronic device in a network environment 700, according to an embodiment. Such an electronic device may, for example, be or include a User Equipment (UE) in a cellular network, and, when receiving data, it may perform channel estimation and use the resulting channel estimates as part of the process of receiving data, as discussed in further detail above, in the context of FIG. 6A and 6B.

Referring to FIG. 7, an electronic device 701 in a network environment 700 may communicate with an electronic device 702 via a first network 798 (e.g., a short-range wireless communication network), or an electronic device 704 or a server 708 via a second network 799 (e.g., a long-range wireless communication network). The electronic device 701 may communicate with the electronic device 704 via the server 708. The electronic device 701 may include a processor 720, a memory 730, an input device 750, a sound output device 755, a display device 760, an audio module 770, a sensor module 776, an interface 777, a haptic module 779, a camera module 780, a power management module 788, a battery 789, a communication module 790, a subscriber identification module (SIM) card 796, or an antenna module 797. In one embodiment, at least one (e.g., the display device 760 or the camera module 780) of the components may be omitted from the electronic device 701, or one or more other components may be added to the electronic device 701. Some of the components may be implemented as a single integrated circuit (IC). For example, the sensor module 776 (e.g., a fingerprint sensor, an iris sensor, or an illuminance sensor) may be embedded in the display device 760 (e.g., a display).

The processor 720 may execute software (e.g., a program 740) to control at least one other component (e.g., a hardware or a software component) of the electronic device 701 coupled with the processor 720 and may perform various data processing or computations.

As at least part of the data processing or computations, the processor 720 may load a command or data received from another component (e.g., the sensor module 776 or the communication module 790) in volatile memory 732, process the command or the data stored in the volatile memory 732, and store resulting data in non-volatile memory 734. The processor 720 may include a main processor 721 (e.g., a central processing unit (CPU) or an application processor (AP)), and an auxiliary processor 723 (e.g., a graphics processing unit (GPU), an image signal processor (ISP), a sensor hub processor, or a communication processor (CP)) that is operable independently from, or in conjunction with, the main processor 721. Additionally or alternatively, the auxiliary processor 723 may be adapted to consume less power than the main processor 721, or execute a particular function. The auxiliary processor 723 may be implemented as being separate from, or a part of, the main processor 721.

The auxiliary processor 723 may control at least some of the functions or states related to at least one component (e.g., the display device 760, the sensor module 776, or the communication module 790) among the components of the electronic device 701, instead of the main processor 721 while the main processor 721 is in an inactive (e.g., sleep) state, or together with the main processor 721 while the main processor 721 is in an active state (e.g., executing an application). The auxiliary processor 723 (e.g., an image signal processor or a communication processor) may be implemented as part of another component (e.g., the camera module 780 or the communication module 790) functionally related to the auxiliary processor 723.

The memory 730 may store various data used by at least one component (e.g., the processor 720 or the sensor module 776) of the electronic device 701. The various data may include, for example, software (e.g., the program 740) and input data or output data for a command related thereto. The memory 730 may include the volatile memory 732 or the non-volatile memory 734. Non-volatile memory 734 may include internal memory 736 and/or external memory 738.

The program 740 may be stored in the memory 730 as software, and may include, for example, an operating system (OS) 742, middleware 744, or an application 746.

The input device 750 may receive a command or data to be used by another component (e.g., the processor 720) of the electronic device 701, from the outside (e.g., a user) of the electronic device 701. The input device 750 may include, for example, a microphone, a mouse, or a keyboard.

The sound output device 755 may output sound signals to the outside of the electronic device 701. The sound output device 755 may include, for example, a speaker or a receiver. The speaker may be used for general purposes, such as playing multimedia or recording, and the receiver may be used for receiving an incoming call. The receiver may be implemented as being separate from, or a part of, the speaker.

The display device 760 may visually provide information to the outside (e.g., a user) of the electronic device 701. The display device 760 may include, for example, a display, a hologram device, or a projector and control circuitry to control a corresponding one of the display, hologram device, and projector. The display device 760 may include touch circuitry adapted to detect a touch, or sensor circuitry (e.g., a pressure sensor) adapted to measure the intensity of force incurred by the touch.

The audio module 770 may convert a sound into an electrical signal and vice versa. The audio module 770 may obtain the sound via the input device 750 or output the sound via the sound output device 755 or a headphone of an external electronic device 702 directly (e.g., wired) or wirelessly coupled with the electronic device 701.

The sensor module 776 may detect an operational state (e.g., power or temperature) of the electronic device 701 or an environmental state (e.g., a state of a user) external to the electronic device 701, and then generate an electrical signal or data value corresponding to the detected state. The sensor module 776 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 777 may support one or more specified protocols to be used for the electronic device 701 to be coupled with the external electronic device 702 directly (e.g., wired) or wirelessly. The interface 777 may include, for example, a high- definition multimedia interface (HDMI), a universal serial bus (USB) interface, a secure digital (SD) card interface, or an audio interface.

A connecting terminal 778 may include a connector via which the electronic device 701 may be physically connected with the external electronic device 702. The connecting terminal 778 may include, for example, an HDMI connector, a USB connector, an SD card connector, or an audio connector (e.g., a headphone connector).

The haptic module 779 may convert an electrical signal into a mechanical stimulus (e.g., a vibration or a movement) or an electrical stimulus which may be recognized by a user via tactile sensation or kinesthetic sensation. The haptic module 779 may include, for example, a motor, a piezoelectric element, or an electrical stimulator.

The camera module 780 may capture a still image or moving images. The camera module 780 may include one or more lenses, image sensors, image signal processors, or flashes. The power management module 788 may manage power supplied to the electronic device 701. The power management module 788 may be implemented as at least part of, for example, a power management integrated circuit (PMIC).

The battery 789 may supply power to at least one component of the electronic device 701. The battery 789 may include, for example, a primary cell which is not rechargeable, a secondary cell which is rechargeable, or a fuel cell.

The communication module 790 may support establishing a direct (e.g., wired) communication channel or a wireless communication channel between the electronic device 701 and the external electronic device (e.g., the electronic device 702, the electronic device 704, or the server 708) and performing communication via the established communication channel. The communication module 790 may include one or more communication processors that are operable independently from the processor 720 (e.g., the AP) and supports a direct (e.g., wired) communication or a wireless communication. The communication module 790 may include a wireless communication module 792 (e.g., a cellular communication module, a short-range wireless communication module, or a global navigation satellite system (GNSS) communication module) or a wired communication module 794 (e.g., a local area network (LAN) communication module or a power line communication (PLC) module). A corresponding one of these communication modules may communicate with the external electronic device via the first network 798 (e.g., a short-range communication network, such as BLUETOOTH™, wireless-fidelity (Wi-Fi) direct, or a standard of the Infrared Data Association (IrDA)) or the second network 799 (e.g., a long-range communication network, such as a cellular network, the Internet, or a computer network (e.g., LAN or wide area network (WAN)). These various types of communication modules may be implemented as a single component (e.g., a single IC), or may be implemented as multiple components (e.g., multiple ICs) that are separate from each other. The wireless communication module 792 may identify and authenticate the electronic device 701 in a communication network, such as the first network 798 or the second network 799, using subscriber information (e.g., international mobile subscriber identity (IMSI)) stored in the subscriber identification module 796.

The antenna module 797 may transmit or receive a signal or power to or from the outside (e.g., the external electronic device) of the electronic device 701. The antenna module 797 may include one or more antennas, and, therefrom, at least one antenna appropriate for a communication scheme used in the communication network, such as the first network 798 or the second network 799, may be selected, for example, by the communication module 790 (e.g., the wireless communication module 792). The signal or the power may then be transmitted or received between the communication module 790 and the external electronic device via the selected at least one antenna.

Commands or data may be transmitted or received between the electronic device 701 and the external electronic device 704 via the server 708 coupled with the second network 799. Each of the electronic devices 702 and 704 may be a device of a same type as, or a different type, from the electronic device 701. All or some of operations to be executed at the electronic device 701 may be executed at one or more of the external electronic devices 702, 704, or 708. For example, if the electronic device 701 should perform a function or a service automatically, or in response to a request from a user or another device, the electronic device 701, instead of, or in addition to, executing the function or the service, may request the one or more external electronic devices to perform at least part of the function or the service. The one or more external electronic devices receiving the request may perform the at least part of the function or the service requested, or an additional function or an additional service related to the request and transfer an outcome of the performing to the electronic device 701. The electronic device 701 may provide the outcome, with or without further processing of the outcome, as at least part of a reply to the request. To that end, a cloud computing, distributed computing, or client-server computing technology may be used, for example.

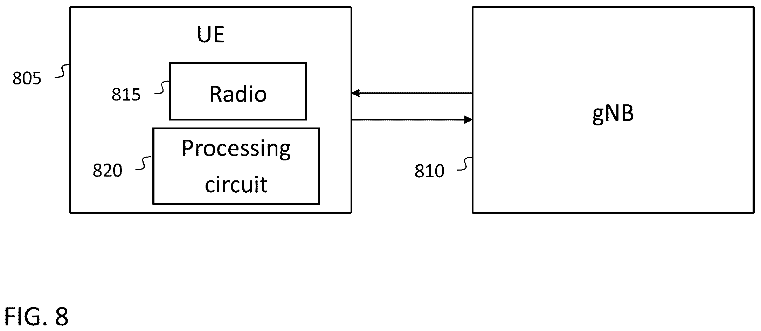

FIG. 8 shows a system including a UE 805 and a gNB 810, in communication with each other. The UE may include a radio 815 and a processing circuit (or a means for processing) 820, which may perform various methods disclosed herein, e.g., Methods 1 through 5, and the method illustrated in FIGs. 6A and 6B. For example, the processing circuit 820 may receive, via the radio 815, transmissions (including reference signal transmissions) from the network node (gNB) 810, and the processing circuit 820 may transmit, via the radio 815, signals to the gNB 810. The processing circuit 820 may also perform channel estimation, using the methods disclosed herein (e.g., using Methods 1 through 5), based on reference signal transmissions received from the gNB 810. For example, the UE may perform channel estimation to generate a channel estimate, which may be used to calculate log likelihood ratios for the received symbols, and the log likelihood ratios may in turn be used to perform soft-decision error-correction-code decoding, to generate a stream of data, which may be referred to as processed data. Such data may be, for example, audio data that is part of a telephone conversation, or data from a web page requested by a browser running on the UE.

Embodiments of the subject matter and the operations described in this specification may be implemented in digital electronic circuitry, or in computer software, firmware, or hardware, including the structures disclosed in this specification and their structural equivalents, or in combinations of one or more of them. Embodiments of the subject matter described in this specification may be implemented as one or more computer programs, i.e., one or more modules of computer-program instructions, encoded on computer-storage medium for execution by, or to control the operation of data-processing apparatus. Alternatively or additionally, the program instructions can be encoded on an artificially generated propagated signal, e.g., a machine-generated electrical, optical, or electromagnetic signal, which is generated to encode information for transmission to suitable receiver apparatus for execution by a data processing apparatus. A computer-storage medium can be, or be included in, a computer-readable storage device, a computer-readable storage substrate, a random or serial-access memory array or device, or a combination thereof. Moreover, while a computer-storage medium is not a propagated signal, a computer-storage medium may be a source or destination of computer-program instructions encoded in an artificially generated propagated signal. The computer-storage medium can also be, or be included in, one or more separate physical components or media (e.g., multiple CDs, disks, or other storage devices). Additionally, the operations described in this specification may be implemented as operations performed by a data-processing apparatus on data stored on one or more computer-readable storage devices or received from other sources.

While this specification may contain many specific implementation details, the implementation details should not be construed as limitations on the scope of any claimed subject matter, but rather be construed as descriptions of features specific to particular embodiments. Certain features that are described in this specification in the context of separate embodiments may also be implemented in combination in a single embodiment. Conversely, various features that are described in the context of a single embodiment may also be implemented in multiple embodiments separately or in any suitable subcombination. Moreover, although features may be described above as acting in certain combinations and even initially claimed as such, one or more features from a claimed combination may in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described herein. Other embodiments are within the scope of the following claims. In some cases, the actions set forth in the claims may be performed in a different order and still achieve desirable results. Additionally, the processes depicted in the accompanying figures do not necessarily require the particular order shown, or sequential order, to achieve desirable results. In certain implementations, multitasking and parallel processing may be advantageous.

As will be recognized by those skilled in the art, the innovative concepts described herein may be modified and varied over a wide range of applications with in the scope of the appended claims.

**Claims**

1. A method, comprising:

    calculating (600), by a receiver, a first channel estimate, at an nth point in time, the calculating comprising calculating an (n+D)th state vector, the (n+D)th state vector corresponding to a channel history at an (n+D)th point in time, D being a positive integer;
    performing (605) signal processing of a received signal, based on the first channel estimate, to generate processed data; and

transmitting (610) the processed data to a data consumer,

the (n+D)th state vector comprising elements from p update intervals,

the first channel estimate at the nth point in time comprising an element for each of k subcarriers, k being a positive integer, and

the (n+D)th state vector having fewer than $kp(D+1)$ elements.

2. The method of claim 1, wherein the (n+D)th state vector has fewer than $kp(D+1)/2$ elements.

3. The method of claim 1, wherein the (n+D)th state vector has fewer than $2k(D+1)$ elements or fewer than $2kp$ elements.

4. The method of any one of claims 1 to 3, wherein the first channel estimate at the nth point in time is a vector comprising an element for each of a plurality of subcarriers.

5. The method of any one of claims 1 to 4, wherein:

the first channel estimate is a scalar corresponding to a first subcarrier of a plurality of subcarriers, and

the method further comprises calculating (620) a second channel estimate, at the nth point in time, the second channel estimate at the nth point in time being a scalar corresponding to a second subcarrier of the plurality of subcarriers.

6. The method of any one of claims 1 to 5, further comprising calculating an mth state vector,

the mth state vector corresponding to a channel history at an mth point in time; and

the calculating of the mth state vector comprising calculating a product of a state transition model raised to the power j and an updated (m-j)th state vector, the updated (m-j)th state vector corresponding to a channel history at an (m-j)th point in time.

7. The method of claim 6, wherein the receiver lacks measurements for a plurality of update intervals between the (m-j)th point in time and the mth point in time.

8. A system, comprising:

a radio (115, 815); and

one or more processors (120, 820); and

a memory storing instructions which, when executed by the one or more processors (120, 820), cause performance of the method according to any one of the preceding claims.

EP 4 708 786 A1

105

Satellite
transceiver

110

Ground
Transceiver

FIG. 1A

110

Ground transceiver

115

Radio

120

Processing
circuit

FIG. 1B

FIG. 2

FIG. 3

$y_{n-p+1}$

305

Prev. slots (p-1)

*Curr. Slot n*

Next slots (Delay D)

| $y_{n-1}$ | $y_n$ | $y_{n+1}$ | | | | | $y_{n+D}$ |

$x_{n|n}^{(e)} = f_{KF}(x_{n-1|n-1}^{(e)}, P_{n-1|n-1}^{(e)}; y_n)$

**D-p+1**  **p**

| | | | | | | $h_n$ |

310d
$h_{n-D+1}$

$h_{n-p+1}$

$x_{n+1|n+1}^{(e)}$

| | | | | | | $h_{n+1}$ |

310e
$h_{n-D+2}$

$h_{n-p+2}$

$x_{n+D|n+D}^{(a)}$

| $h_n$ | | | | | | | $h_{n+D}$ |

310f

FIG. 4

23

FIG. 5

Calculate, by a receiver, a first channel estimate, at an nth point in time, the calculating comprising calculating an (n+D)th state vector, the (n+D)th state vector corresponding to a channel history at an (n+D)th point in time, D being a positive integer ⟿ 600

Perform signal processing of a received signal, based on the first channel estimate, to generate processed data ⟿ 605

Transmit the processed data to a data consumer ⟿ 610

FIG. 6A

| Step 610 of FIG. 6A |
|---|

| Calculate an mth state vector, the mth state vector corresponding to a channel history at an mth point in time | 615 |
|---|---|

| Calculate a second channel estimate, at the nth point in time, the second channel estimate at the nth point in time being a scalar corresponding to a second subcarrier of a plurality of subcarriers. | 620 |
|---|---|

FIG. 6B

FIG. 7

EP 4 708 786 A1

FIG. 8

Europäisches
Patentamt
European
Patent Office
Office européen
des brevets

# EUROPEAN SEARCH REPORT

**Application Number**

EP 25 20 0492

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PING WAN ET AL: "Channel estimation in fast fading channels", COMMUNICATIONS AND NETWORKING IN CHINA, 2008. CHINACOM 2008. THIRD INTERNATIONAL CONFERENCE ON, IEEE, PISCATAWAY, NJ, USA, 25 August 2008 (2008-08-25), pages 647-651, XP031364904, DOI: 10.1109/CHINACOM.2008.4685109 ISBN: 978-1-4244-2373-6 * the whole document * | 1-8 | INV. H04L25/02 |
| X | PARK SANGJOON ET AL: "Iterative Equalizer Based on Kalman Filtering and Smoothing for MIMO-ISI Channels", IEEE TRANSACTIONS ON SIGNAL PROCESSING, IEEE, USA, vol. 63, no. 19, 1 October 2015 (2015-10-01), pages 5111-5120, XP011667876, ISSN: 1053-587X, DOI: 10.1109/TSP.2015.2457399 [retrieved on 2015-09-01] * the whole document * | 1-8 | |
| X | US 2024/069209 A1 (ETKIN RAUL H [US] ET AL) 29 February 2024 (2024-02-29) * paragraph [0054] - paragraph [0061] * | 1-8 | **TECHNICAL FIELDS SEARCHED (IPC)** H04L |

The present search report has been drawn up for all claims

| Place of search | Date of completion of the search | Examiner |
|---|---|---|
| Munich | 8 December 2025 | Murcia Martinez, J |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.......................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 20 0492

This annex lists the patent family members relating to the patent documents cited in  the above-mentioned European search report.
The members are as contained in the European Patent Office EDP file on
The European Patent Office is in no way liable for these particulars which are merely given for the purpose of information.

08-12-2025

| Patent document cited in search report | Publication date | Patent family member(s) | Publication date |
|---|---|---|---|
| US 2024069209 A1 | 29-02-2024 | CN 117630995 A | 01-03-2024 |
| | | KR 20240027529 A | 04-03-2024 |
| | | US 2024069209 A1 | 29-02-2024 |

EPO FORM P0459

For more details about this annex : see Official Journal of the European Patent Office, No. 12/82